# EUROPÄISCHE PATENTSCHRIFT

(11) **EP 2 102 039 B1**
(45) Veröffentlichungstag und Bekanntmachung des Hinweises auf die Patenterteilung: **20.04.2011**
(21) Anmeldenummer: 07822661.0
(22) Anmeldetag: 16.11.2007
(51) Int. Cl.: B60S 1/04

(54) **SCHEIBENWISCHVORRICHTUNG, INSBESONDERE FÜR EIN KRAFTFAHRZEUG**
WINDSCREEN WIPING DEVICE, PARTICULARLY FOR A MOTOR VEHICLE
DISPOSITIF D'ESSUIE-GLACE, EN PARTICULIER POUR VÉHICULE AUTOMOBILE

(30) Priorität: 12.12.2006 DE 102006058740
(43) Veröffentlichungstag der Anmeldung: 23.09.2009
(73) Patentinhaber: Robert Bosch GmbH, 70442 Stuttgart (DE)
(72) Erfinder: BENNER, Andreas, 77830 Buehlertal (DE); HUMMEL, Rainer, 77866 Rheinau (DE); PINO JOAQUIN, Jose Carlos, 43720 Arbos Del Penedes (ES); DIETRICH, Jan, 77815 Buehl (DE); SURKAMP, Gundolf, 08720 Vilafranca Del Penedes (ES); KRAUS, Achim, 77815 Buehl (DE); BURKARD, Hermann, 76473 Iffezheim (DE)
(86) Internationale Anmeldenummer: PCT/EP2007/062441
(87) Internationale Veröffentlichungsnummer: WO 2008/071515

(56) Entgegenhaltungen:
- EP-A- 0 430 375
- US-B1- 6 434 403

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen für Kraftfahrzeuge bekannt, die einen im Wesentlichen rohrförmigen Träger aufweisen, an dem eine Antriebseinrichtung durch einen Halter befestigt ist, der an einem Gehäuse der Antriebseinrichtung ausgebildet ist. Weiterhin ist es bekannt, am Träger einen separaten Halter, beispielsweise ein Befestigungsblech vorzusehen, an dem die Antriebseinrichtung befestigt ist.

Beispielsweise ist aus der US-B-6,343,403 eine Scheibenwischvorrichtung bekannt, bei der ein rohrförmiger Träger in seinem Mittelabschnitt zu einem U-förmigen Querschnittsprofil gepresst ist. Die Antriebseinrichtung ist hierbei in einem Gehäuse angeordnet, welches einen Halter aufweist, der in diesem U-förmig gebogenen Querschnittsbereich befestigt ist.

Eine gattungsgemäße Scheibeuwischvorrichtung ist aus der EP-A-0 430 375 bekannt.

### Offenbarung der Erfindung

### Vorteile der Erfindung

Die erfindungsgemäße Scheibenwischvorrichtung mit den Merkmalen des Hauptanspruchs hat den Vorteil, dass der Träger, zur Befestigung am Halter, zumindest einen, im Querschnitt im Wesentlichen H-förmigen Abschnitt aufweist. Auf diese Weise ergibt sich eine stabilere und torsionssteifere Scheibenwischvorrichtung, die darüber hinaus wesentlich kostengünstiger, sowie einfacher zu fertigen ist.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn der H-förmige Abschnitt Seitenschenkel und einen die Seitenschenkel verbindenden Zentralabschnitt aufweist, der in seinem Inneren zumindest teilweise hohl ist. Auf diese Weise ergibt sich eine wesentlich höhere Stabilität und Steifigkeit des Trägers und damit der gesamten Scheibenwischvorrichtung.

Weiterhin kann die Stabilität der Scheibenwischvorrichtung vorteilhafter Weise dadurch erhöht werden, dass der H-förmige Abschnitt Seitenschenkel und einen die Seitenschenkel verbindenden Zentralabschnitt aufweist und zumindest einer der Seitenschenkel in seinem Inneren zumindest teilweise hohl ist.

Vorteilhaft ist darüber hinaus, wenn ein Befestigungselement zur Befestigung des Trägers am Halter vorgesehen ist, das durch eine selbstschneidende Gewindeschraube gebildet ist.

In einer besonders vorteilhaften Ausgestaltung weist der Halter im Bereich des H-förmigen Abschnitts eine Aufnahme für das Befestigungselement auf, wobei der Träger eine Aussparung aufweist, die komplementär zu der Aussparung im Halter ausgebildet bzw. angeordnet ist.

In einer Variation sind die Befestigungselemente vorteilhafter Weise durch Blindniete gebildet.

Eine sehr hohe Stabilität ergibt sich dadurch, dass der Halter als Befestigungsdom ausgebildet ist und der Träger im Bereich seines H-förmigen Abschnitts auf den Halter aufsetzbar ist.

Eine besonders leichte Montage der Scheibenwischvorrichtung wird dadurch erzielt, dass der Halter mindestens einen Stift aufweist, der zur Positionierung des Wischermotors zu dem Träger in mindestens eine am Träger komplementär ausgebildete zweite Aussparung eingreift.

### Beschreibung der Zeichnungen

Ein Ausführungsbeispiel der Erfindung ist in den Zeichnungen dargestellt und in der nachfolgenden Beschreibung näher erläutert.

Es zeigen:
Figur 1, eine erfindungsgemäße Scheibenwischvorrichtung in einer schematischen Darstellung,
Figur 2, einen Querschnitt durch den Träger der Scheibenwischvorrichtung und
Figuren 3 bis 6, Querschnitte durch einen Träger der Scheibenwischvorrichtung in verschiedenen Variationen.

### Beschreibung des Ausführungsbeispiels

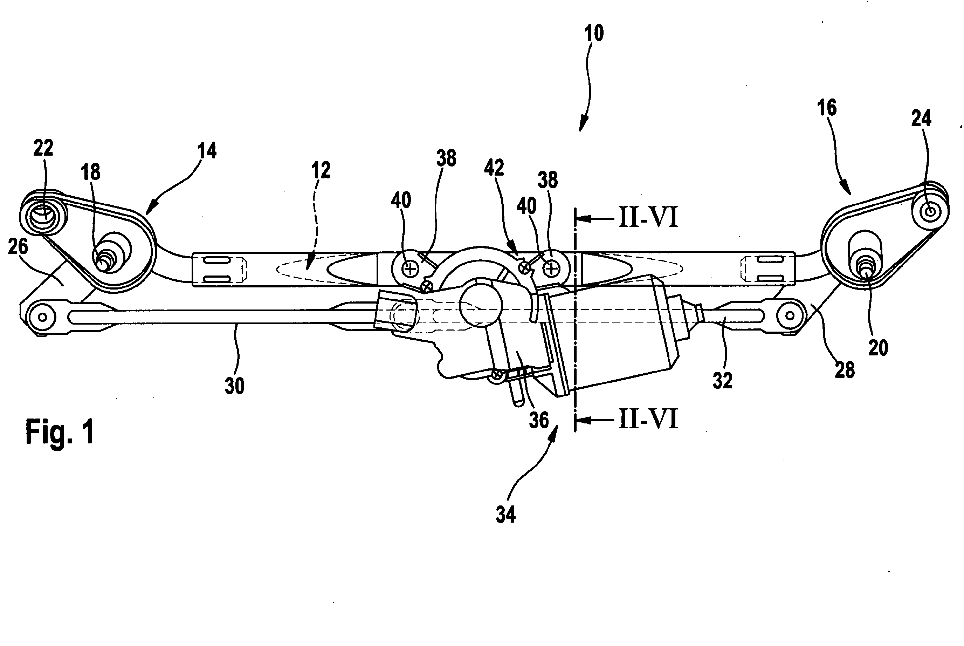

In Figur 1 ist eine Scheibenwischvorrichtung 10 in schematischer Darstellung gezeigt.

Diese umfasst im Wesentlichen einen Träger 12, der als Rohr ausgebildet ist. Neben dem hier gezeigten kreisrunden Querschnitt kann das Rohr natürlich auch einen quadratischen, rechteckigen oder elliptischen Querschnitt aufweisen. Grundsätzlich ist jedoch auch ein Profilträger anstatt eines Rohrs möglich.

An den Enden der Längserstreckung des Trägers 12 ist jeweils ein Wischerlager 14, 16 befestigt, in dem jeweils eine Wischerwelle 18, 20 gelagert ist. Die Wischerlager 14, 16 sind an den Träger 12, kraft- und/oder form- und/oder stoffschlüssig befestigt, beispielsweise angecrimmpt, angeschweißt, angeschraubt oder angenietet. Auch eine oder Schnapp- oder Clipsverbindung ist hier möglich.

An den Wischerlagern 14, 16 ist darüber hinaus ein Befestigungsabschnitt 22, 24 vorgesehen, der zur Befestigung der Scheibenwischvorrichtung 10 an einem Kraftfahrzeug dient. Die Wischerwellen 18, 20 werden jeweils über eine Antriebskurbel 26, 28, die drehfest mit der jeweiligen Wischerwelle 18, 20 verbunden ist, angetrieben. Damit die Wischerwellen 18, 20 eine pendelnde Bewegung vollführen, ist am freien Ende der jeweiligen Antriebskurbel 26, 28, jeweils eine Schubstange 30, 32 angelenkt, deren der Kurbel 26, 28 abgewandtes Ende mit einer Abtriebskurbel, einer Antriebseinrichtung 34 verbunden ist. Vollführt die Abtriebskurbel der Antriebseinrichtung 34 eine kreisförmige oder pendelnde Bewegung, so werden die Antriebskurbeln 26, 28 durch die Schubstangen 30, 32 in eine pendelnde Bewegung versetzt. Die Antriebseinrichtung 34 ist hier als Elektromotor ausgebildet, in den ein Schneckengetriebe integriert ist. Die Antriebseinrichtung 34 ist von einem Gehäuse 36 umschlossen, welches Halter 38 aufweist, die der Befestigung der Antriebseinrichtung 34 am Träger 12 dienen. Die Halter 38 sind hierbei als Dome ausgebildet. Diese können jeweils eine Aufnahme zur Aufnahme von Befestigungselementen 40 aufweisen. Als Befestigungselemente 40 können hierbei selbstschneidende Gewindeschrauben, Blindniete oder Klammern dienen. Der Halter 38 ist hierbei im mittleren Bereich bezüglich der Längserstreckung des Trägers 12, also zwischen den Wischerlagern 14, 16, am Träger 12 befestigt. Hierzu ist der rohrförmige Träger 12 im Bereich der Halter 38 zu einem H-förmigen Profil zusammengequetscht, so dass der Träger 12 einen H-förmigen Abschnitt 42 aufweist.

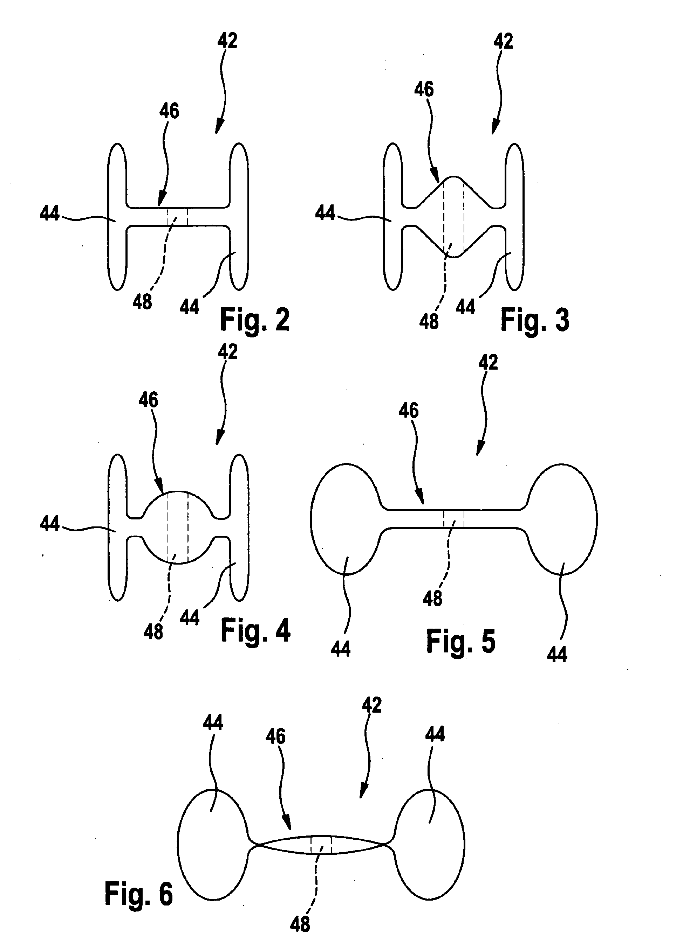

In Figur 2 ist ein Querschnitt durch den H-förmigen Abschnitt 42 des Trägers 12 gezeigt. Der H-förmige Abschnitt weist hierbei zwei Seitenschenkel 44 auf, die etwa in der Mitte ihrer Längserstreckung durch einen Zentralabschnitt 46 miteinander verbunden sind. Ist der Träger 12 aus einem Blechrohr mit der Dicke D gefertigt, so ergibt sich für die Seitenschenkel 44 und dem Zentralabschnitt 46 eine Dicke von etwa 2 Blechlagen und damit eine Dicke von 2 D. Etwa in der Mitte zwischen den beiden Seitenschenkeln 44 weist der Zentralabschnitt 46 eine Aussparung 48 auf, die beispielsweise als kreisrundes Loch ausgeführt ist. Die Aussparung 48 dient hierbei dem Zusammenwirken mit dem Befestigungselement 40, so dass der H-förmige Abschnitt 42 und damit der Träger 12 mit dem Halter 38 des Gehäuses 36 verbunden werden kann.

In Figur 3 ist eine Variation des im Wesentlichen H-förmigen Abschnitts 42 einer Scheibenwischvorrichtung 10 gezeigt. Die beiden Seitenschenkel 44 sind wie in Figur 2 ausgebildet. Der Zentralabschnitt 46 jedoch ist hierbei rautenförmig ausgebildet, so dass der Zentralabschnitt 46 in seinem Inneren hohl ausgebildet ist. Die Aussparung 48 als Aufnahme für das Befestigungselement ist hierbei durch eine Bohrung gebildet, die etwa durch die beiden, den Seitenschenkeln 44 abgewandten Ecken des im Querschnitt rautenförmigen Zentralabschnitts 46 verlaufen. In einer Variation kann die Bohrung aber auch durch die beiden, im Wesentlichen parallel verlaufenden Flächen des rautenförmigen Zentralabschnitts 46, mithin also schräg verlaufen.

In Figur 4 ist eine weitere Variation des H-förmigen Abschnitts 42 gezeigt. Die beiden Seitenschenkel 44 sind hierbei gleich wie in den Figuren 2 und 3 ausgebildet. Der Zentralabschnitt 46 jedoch ist hierbei zu einer im Querschnitt im Westentlichen kreisrunden Form gebogen, so dass sich im Inneren ein Hohlraum ergibt. Die Aussparung 48 wird durch zwei Bohrungen an den Seitenwänden dargestellt, die zwischen den Seitenschenkeln 44 liegen. Dadurch ergibt sich auf beiden Seiten des Zentralabschnitts 46 eine Öffnung, durch die das Befestigungselement 40 im Wesentlichen parallel zu den Seitenschenkeln 44 durchgefädelt werden kann.

In Figur 5 ist eine weitere Variation des Abschnitts 42 gezeigt. Hierbei ist der H-förmige Abschnitt 42 im Wesentlichen knochenförmig ausgebildet. Die beiden Seitenschenkel 44 sind im Wesentlichen kreisrund und innen hohl ausgebildet. Verbunden sind die beiden Seitenschenkel 44 durch den Zentralabschnitt 46, der in seinem Inneren jedoch nicht zur Gänze ausgefüllt ist. Dadurch entsteht ein Hohlraum, der die Hohlräume der Seitenschenkel 44 miteinander verbindet. Zur Aufnahme des Befestigungselementes sind auch hier im Zentralabschnitt 46 zwei Bohrungen als Aussparungen 48 vorgesehen, durch die das Befestigungselement 40 gefädelt werden kann.

In Figur 6 ist noch eine weitere Variation des H-förmigen Abschnitts 42 im Querschnitt dargestellt. Die beiden Seitenschenkel 44 sind hier ebenfalls wie im in Figur 5 gezeigten Beispiel innen hohl, so dass sich auch hier im Wesentlichen eine Knochenform ergibt. Der Zentralabschnitt 46 ist im Bereich zwischen den beiden Seitenschenkeln 44 hohl ausgebildet, jedoch sind die Anschlussbereiche zwischen dem Zentralabschnitt 46 und dem jeweiligen Seitenschenkel 44 derart zusammengequetscht, so dass an dieser Stelle kein Hohlraum vorgesehen ist. Zur Aufnahme des Befestigungselementes 40 sind auch hier Aussparungen 48 vorgesehen, die als Bohrungen im Zentralabschnitt 46 ausgebildet sind.

All diesen Ausführungsbeispielen aus Figur 2 bis Figur 6 ist gemein, dass diese bezüglich der Seitenschenkel 44 und des Zentralabschnitts 46 im Querschnitt spiegelsymmetrisch ausgebildet sind. Die Aussparung 48 zur Aufnahme des Befestigungselementes 40 ist dabei im Wesentlichen mittig zwischen den beiden Seitenschenkeln 44 angeordnet und durchgreift den Zentralabschnitt 46 in voller Länge. Das Befestigungselement kann dabei jeweils parallel zu den Seitenschenkeln 44 aufgenommen werden.

Die Ausführungsbeispiele in Figuren 5 und 6, die eine im Wesentlichen knochenförmige Ausbildung des Querschnitts des Abschnitts 42 zeigen, sind nicht auf eine im Querschnitt kreisrunde Form der Seitenschenkel 44 beschränkt. Vielmehr können die Seitenschenkel 44 auch elliptisch ausgebildet sein. Weiterhin ist es auch möglich, völlig auf die Symmetrie zwischen den beiden Seitenschenkeln 44 zu verzichten, und nur einen Seitenschenkel 44 vorzusehen.

Weiterhin kann im Zentralabschnitt 46 auch eine zweite Aussparung vorgesehen sein, die den Zentralabschnitt 46 nicht vollständig durchgreift. Diese zweite Aussparung ist dann so angeordnet, dass sie einen Stift aufzunehmen vermag, der am Halter 38 der Scheibenwischvorrichtung 10 angeordnet ist, so dass der H-förmige Abschnitt 40 des Trägers 12 bei der Montage einfacher und exakter positioniert werden kann. Dadurch wird eine Positionierhilfe dargestellt, die die Montage der Scheibenwischvorrichtung 10 wesentlich erleichtert.

## Patentansprüche

1. Scheibenwischvorrichtung (10), insbesondere für ein Kraftfahrzeug, mit einem Träger (12), der insbesondere im wesentlichen rohrförmig ausgebildet ist, einer Antriebseinrichtung (34) und einem Halter (38), der an einem Gehäuse (36) der Antriebseinrichtung (34) ausgebildet ist,
**dadurch gekennzeichnet, daß**
der Träger (12) zur Befestigung am Halter (38) zumindest einen im Querschnitt im wesentlichen H-förmigen Abschnitt (42) aufweist.

2. Scheibenwischvorrichtung (10) nach Anspruch 1, **dadurch gekennzeichnet, daß** der H-förmige Abschnitt (42) Seitenschenkel (44) und einen, die Seitenschenkel (44) verbindenden Zentralabschnitt (46) aufweist, und der Zentralabschnitt (46) und/oder zumindest einer er Seitenschenkel (44) in ihrem Inneren zumindest teilweise hohl ausgebildet sind.

3. Scheibenwischvorrichtung (10) nach einem der vorhergehenden Ansprüche, **dadurch gekennzeichnet, dass** mindestens ein Befestigungselement (40) zur Befestigung des Trägers (12) am Halter (38) vorgesehen ist, das durch eine selbstschneidende Gewindeschraube gebildet ist.

4. Scheibenwischvorrichtung (10) nach einem der vorhergehenden Ansprüche, **dadurch gekennzeichnet, daß** der Halter (38), insbesondere im Bereich des H-förmigen Abschnitts (42), mindestens eine Aufnahme für ein Befestigungselement (40) umfasst, wobei der Träger (12) mindestens eine Aussparung (48) aufweist, die komplementär zu der mindestens einen in dem Halter (38) ausgebildet ist.

5. Scheibenwischvorrichtung (10) nach Anspruch 4, **dadurch gekennzeichnet, dass** das mindestens eine Befestigungselement (40) durch einen Blindniet gebildet ist.

6. Scheibenwischvorrichtung (10) nach einem der vorhergehenden Ansprüche, **dadurch gekennzeichnet, daß** der Halter (38) als Befestigungsdom ausgebildet ist und der Träger (12) im Bereich seines H-förmigen Abschnitts (42) auf den Halter (38) aufsetzbar ist.

7. Scheibenwischvorrichtung (10) nach einem der vorhergehenden Ansprüche, **dadurch gekennzeichnet, dass** der Halter (38) mindestens einen Stift aufweist, der zur Positionierung der Antriebseinrichtung (34) zu dem Träger (12) in mindestens eine am Träger (12) komplementär ausgebildete zweite Aussparung eingreift.

## Claims

1. Windscreen wiping device (10), particularly for a motor vehicle, with a carrier (12) which in particular is of substantially tubular design, a drive mechanism (34) and a holder (38) which is formed on a housing (36) of the drive mechanism (34), **characterized in that** the carrier (12) has at least one section (42) which is substantially H-shaped in cross section for fastening to the holder (38).

2. Windscreen wiping device (10) according to Claim 1, **characterized in that** the H-shaped section (42) has side limbs (44) and a central section (46) connecting the side limbs (44), and the central section (46) and/or at least one of the side limbs (44) are/is at least partially of hollow design in the interior thereof.

3. Windscreen wiping device (10) according to one of the preceding claims, **characterized in that** at least one fastening element (40) is provided for fastening the carrier (12) to the holder (38), said fastening element being formed by a tapping screw.

4. Windscreen wiping device (10) according to one of the preceding claims, **characterized in that** the holder (38), in particular in the region of the H-shaped section (42), comprises at least one receptacle for a fastening element (40), the carrier (12) having at least one cutout (48) which is formed in a complementary manner to the at least one cutout in the holder (38).

5. Windscreen wiping device (10) according to Claim 4, **characterized in that** the at least one fastening element (40) is formed by a blind rivet.

6. Windscreen wiping device (10) according to one of the preceding claims, **characterized in that** the holder (38) is designed as a fastening dome, and the carrier (12) can be placed in the region of the H-shaped section (42) thereof onto the holder (38).

7. Windscreen wiping device (10) according to one of the preceding claims, **characterized in that** the holder (38) has at least one pin which, for positioning the drive mechanism (34) with respect to the carrier (12), engages in at least one second cutout formed in a complementary manner on the carrier (12).

## Revendications

1. Dispositif d'essuie-glace (10), en particulier pour un véhicule automobile, comprenant un support (12), qui est réalisé essentiellement sous forme tubulaire, un dispositif d'entraînement (34) et un dispositif de retenue (38) qui est réalisé sur un boîtier (36) du dispositif d'entraînement (34),
**caractérisé en ce que**
le support (12), pour la fixation sur le dispositif de retenue (38), présente au moins une portion (42) de section transversale essentiellement en forme de H.

2. Dispositif d'essuie-glace (10) selon la revendication 1, **caractérisé en ce que** la portion en forme de H (42) présente des branches latérales (44) et une portion centrale (46) reliant les branches latérales (44), et la portion centrale (46) et/ou au moins l'une des branches latérales (44) étant réalisées de façon à disposer d'un intérieur au moins en partie creux.

3. Dispositif d'essuie-glace (10) selon l'une quelconque des revendications précédentes, **caractérisé en ce qu'**au moins un élément de fixation (40) est prévu pour la fixation du support (12) sur le dispositif de retenue (38), lequel est formé par une vis filetée autotaraudeuse.

4. Dispositif d'essuie-glace (10) selon l'une quelconque des revendications précédentes, **caractérisé en ce que** le dispositif de retenue (38) , en particulier dans la région de la portion en forme de H (42), comprend au moins un logement pour un élément de fixation (40), le support (12) présentant au moins un évidement (48), qui est réalisé de manière complémentaire à l'au moins un logement dans le dispositif de retenue (38).

5. Dispositif d'essuie-glace (10) selon la revendication 4, **caractérisé en ce que** l'au moins un élément de fixation (40) est formé par un rivet borgne.

6. Dispositif d'essuie-glace (10) selon l'une quelconque des revendications précédentes, **caractérisé en ce que** le dispositif de retenue (38) est réalisé sous forme de dôme de fixation et le support (12) peut être placé dans la région de sa portion en forme de H (42) sur le dispositif de retenue (38).

7. Dispositif d'essuie-glace (10) selon l'une quelconque des revendications précédentes, **caractérisé en ce que** le dispositif de retenue (38) présente au moins une goupille qui vient en prise dans au moins un deuxième évidement réalisé de manière complémentaire sur le support (12), pour le positionnement du dispositif d'entraînement (34) par rapport au support (12).
